# EUROPÄISCHE PATENTSCHRIFT

(11) **EP 1 082 232 B1**
(45) Veröffentlichungstag und Bekanntmachung des Hinweises auf die Patenterteilung: **02.01.2002**
(21) Anmeldenummer: 99911751.8
(22) Anmeldetag: 08.03.1999
(51) Int. Cl.: B60N 2/08

(54) **VERRIEGELUNGSVORRICHTUNG**
LOCKING DEVICE
DISPOSITIF DE VERROUILLAGE

(30) Priorität: 29.05.1998 DE 19824038
(43) Veröffentlichungstag der Anmeldung: 14.03.2001
(73) Patentinhaber: Keiper GmbH & Co., 67657 Kaiserslautern (DE)
(72) Erfinder: UNCKRICH, Hermann, D-67821 Alsenz (DE)
(74) Vertreter: Patentanwälte Bartels und Partner
(86) Internationale Anmeldenummer: EP9901477
(87) Internationale Veröffentlichungsnummer: WO9962737

(56) Entgegenhaltungen:
- EP-A- 0 786 371
- WO-A-95/17317
- WO-A-96/11123
- DE-A- 4 432 861
- DE-C- 4 242 895

## Beschreibung

Die Erfindung betrifft eine Verriegelungsvorrichtung für Fahrzeugsitze mit zwei relativ zueinander einstellbaren Teilen, mit einer dem einen Teil zugeordneten, sich in der Einstellrichtung erstreckenden Schiene, die mindestens eine sich in Schienenlängsrichtung erstreckende Reihe von Rastöffnungen aufweist, die durch stegartige Materialpartien voneinander getrennt sind, und mit dem anderen Teil zugeordneten Sperriegeln, die quer zur Erstreckungsrichtung der Schiene relativ zu dieser zwischen einer Freigabestellung und einer Sperrstellung bewegbar sowie über eine Betätigungseinrichtung ansteuerbar sind und von denen in der Sperrstellung für eine Sperrung in entgegengesetzten Richtungen der relativ zueinander einstellbaren Teile mindestens zwei Sperriegel in eine jeweils zugeordnete Rastöffnung eingreifen.

Durch die PCT-WO 95/17317 A1 ist eine dahingehende Verriegelungsvorrichtung für Fahrzeugsitze bekannt. Mit dieser bekannten Verriegelungsvorrichtung ist es möglich, zwei einstellbare Teile des Fahrzeugsitzes relativ zueinander stufenlos einzustellen, wobei auch im Falle einer erhöhten Belastung eine sichere Verriegelung dem Grunde nach realisiert ist. Bei der bekannten Lösung weisen die Sperriegel bedingt durch schräg angeordnete Angriffsflächen eine Keilform auf, wobei vorgesehen ist, daß die geneigten Flächen in eine Richtung quer zur Einstellrichtung weisen mit der Folge, daß eine Belastung mindestens eines der beiden relativ zueinander bewegbaren Teile in der Einstellrichtung allenfalls eine so geringe Kraftkomponente an den Sperriegeln im Sinne eines Lösens der Verriegelung zur Folge hat, daß es in der Regel zu keiner unfreiwilligen Entriegelung kommen kann.

Es hat sich jedoch gezeigt, daß bei einer sehr ungünstigen Krafteinleitung, wie sie beispielsweise in einem Crashfall mit hochfrequenten Schwingungsanteilen auftreten kann, der jeweilige Sperriegel aus seiner Sperrstellung gehoben wird und dadurch eine partielle Längsverschiebung entstehen kann, bis der nächste Sperriegel die Last aufnimmt. Die Ansteuerung des jeweiligen Sperriegels von seiner Freigabe- in die Sperrstellung erfolgt ausschließlich über einen Kraftspeicher in Form einer Druckfeder mit der Möglichkeit, daß es zu den Funktionsablauf störenden Hemmungen kommen kann. Als Betätigungseinrichtung zum Ausheben der jeweiligen Sperriegel aus ihrer Sperrstellung dient ein von außen betätigbarer Aushebestab, der je ein Langloch eines jeden Sperrzahnes durchgreift, so daß über den Aushebestab gemeinsam die Sperriegel in ihre Freigabestellung rückgestellt werden können, wobei wiederum der Kraftspeicher gespannt wird. Die dahingehende Aushebevorrichtung setzt einen langen Eingriffsweg für den Aushebestab voraus und ist mithin groß und kompliziert im Aufbau.

Durch die PCT/WO 96/11123 A1 ist eine vergleichbare Verriegelungsvorrichtung für Fahrzeugsitze bekannt, wobei die Sperriegel als federbelastete zylindrische Sperrbolzen ausgebildet sind, die formschlüssig gegen eine Bewegung aus der Verriegelungsstellung heraus mittels einer Sperre gesichert sind, indem für jeden Sperriegel ein quer zu seinem Verstellweg bewegbares Blockierelement vorhanden ist, an dem in seiner Blockierstellung das der Rastöffnung der Schiene abgekehrte Ende des Sperriegels anliegt. Eine dahingehende Blockiereinrichtung setzt für alle Sperriegel gleiche Eingriffshöhen voraus, so daß eine wirksame Blockierung des jeweiligen Sperriegels nur in seiner voll verriegelten Position möglich ist.

Ausgehend von diesem Stand der Technik liegt der Erfindung die Aufgabe zugrunde, die vorbeschriebenen Verriegelungsvorrichtungen dahingehend weiterzuverbessern, daß ein ungewolltes Außereingriffbringen des jeweiligen Sperriegels aus seiner wirksamen Sperrstellung, insbesondere im Crashfall mit hochfrequenten Schwingungsanteilen, verhindert ist, daß eine definierte und funktionssichere Ansteuerung der Sperriegel gewährleistet ist und daß ein platzsparender sowie kostengünstiger Aufbau erreicht ist. Eine dahingehende Aufgabe löst eine Verriegelungsvorrichtung mit den Merkmalen des Anspruches 1.

Dadurch, daß jedem Sperriegel zugeordnet eine Steuerscheibe vorhanden ist, die von einer gemeinsamen Antriebswelle als Betätigungseinrichtung bewegt den jeweiligen Sperriegel in seinem Bewegungsablauf ansteuert, ist aufgrund der Blockierung über die jeweilige Steuerscheibe ein ungewolltes Außereingriffbringen des jeweiligen Sperriegels aus einer wirksamen Sperrstellung verhindert und es wird erreicht, daß auch im Crashfall mit hochfrequenten Schwingungsanteilen sicher eine Verriegelung stattfindet, da die Sperriegel bei einer etwaigen Aushebebewegung aus ihrer Verriegelungs- oder Sperrstellung entweder in einer wirksamen Sperrstellung noch festgehalten werden oder der mögliche Aushebeweg gesperrt ist, so daß auf jeden Fall noch eine sichere Verriegelung besteht.

Über die Steuerscheibe des jeweiligen Sperriegels ist eine sichere Ansteuerung für denselben erreicht, so daß ein funktionssicherer Betrieb gewährleistet ist. Da als Betätigungseinrichtung eine Antriebswelle eingesetzt ist für alle Steuerscheiben, ist ein platz- und kostensparender Aufbau erreicht.

Weitere vorteilhafte Ausführungsformen der Verriegelungsvorrichtung sind Gegenstand der Unteransprüche.

Im folgenden wird anhand der Zeichnung eine Ausführungsform der Verriegelungsvorrichtung näher erläutert. Es zeigen in prinzipieller und nicht maßstäblicher Darstellung die
- Fig. 1 bis 4: teilweise im Schnitt, teilweise in Draufsicht dargestellt, verschiedene Positionen der Verriegelungsvorrichtung bei einem Verriegelungsvorgang;
- Fig. 5: eine Draufsicht auf einen Ausschnitt der Schiene;
- Fig. 6: im Maßstab 1 : 1 eine perspektivische Ansicht des Riegelgehäuses;
- Fig. 7: einen vergrößert wiedergegebenen Längsschnitt durch das Riegelgehäuse nach der Fig.6.

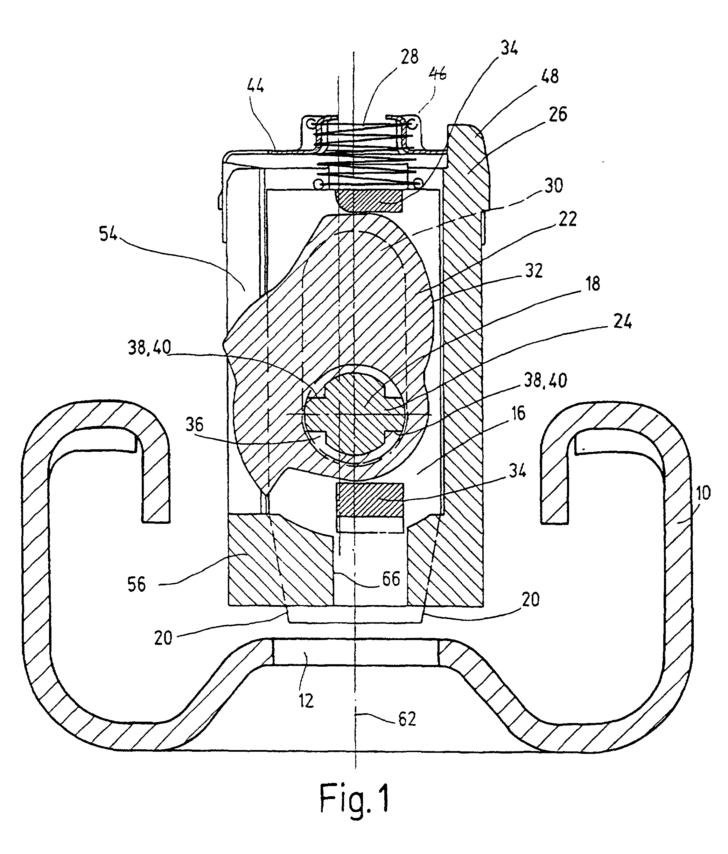

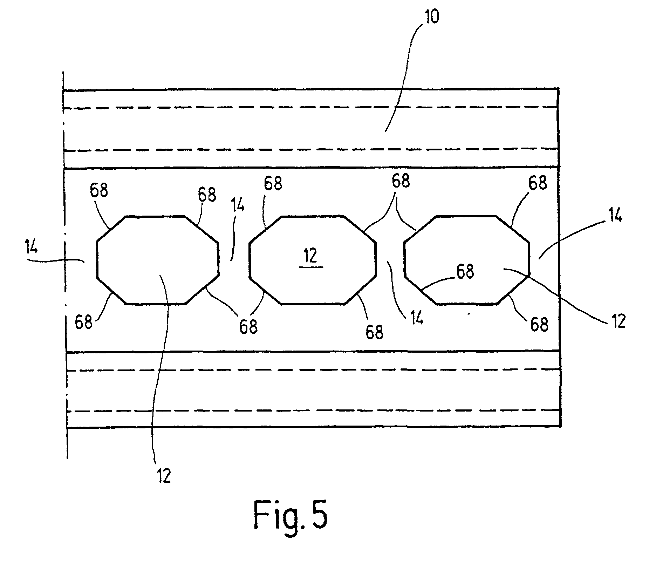

Wie insbesondere die Fig.1 bis 4 zeigen, weist die Verriegelungsvorrichtung für Fahrzeugsitze, insbesondere Kraftfahrzeugsitze aber auch Fluggastsitze, zwei relativ zueinander einstellbare Teile auf mit einer dem einen Teil zugeordneten, sich in der Einstellrichtung erstreckenden Schiene 10, die eine sich in Schienenlängsrichtung erstreckende Reihe von Rastöffnungen 12 (vgl. Fig.5) aufweist, die durch stegartige Materialpartien 14 voneinander getrennt sind. Dabei ist der Boden der Schiene 10 zu ihrem Inneren hin vorgewölbt. Dem anderen, gegebenenfalls ebenfalls schienenartig ausgebildeten Teil sind Sperriegel 16 zugeordnet, die quer zur Erstreckungsrichtung der Schiene 10 relativ zu dieser zwischen einer Freigabestellung und einer Sperrstellung beweglich sowie über eine Betätigungseinrichtung 18 ansteuerbar sind und von denen in der Sperrstellung der relativ zueinander einstellbaren Teile mindestens zwei in eine jeweils zugeordnete Rastöffnung 12 eingreifen, um damit eine Blockierung der zueinander einstellbaren Teile in beiden Verfahrrichtungen sicher zu gewährleisten. Für den Eingriff in die jeweils zugeordnete Rastöffnung 12 weisen die Sperriegel 16 Eingriffsflächen 20 auf, die schräg angeordnet eine Keilform für den jeweiligen Sperriegel 16 bilden und die quer zur Schienenlängsrichtung für einen Eingriff in die Schiene 10 vorgesehen sind.

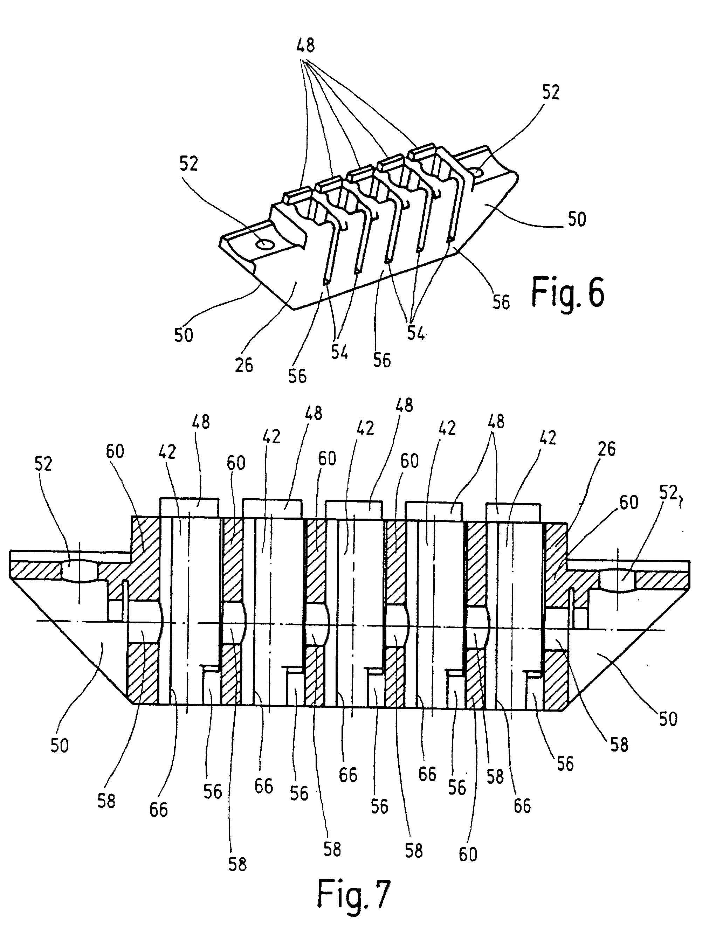

Wie die Fig. 1 bis 4 des weiteren zeigen, ist jedem Sperriegel 16 zugeordnet eine Steuerscheibe 22 vorhanden, die von einer gemeinsamen Antriebswelle 24 als Betätigungseinrichtung 18 den jeweiligen Sperriegel 16 bei seinem Bewegungsablauf zwischen Freigabe- und Sperrstellung sowie in umgekehrter Richtung ansteuert. Der jeweilige Sperriegel 16 ist in einem Riegelgehäuse 26 längsverfahrbar geführt, wie es in den Fig. 6 und 7 näher dargestellt ist, wobei unter der Wirkung eines Kraftspeichers in Form einer Druckfeder 28 eine Kraftkomponente auf den jeweiligen Sperriegel 16 in Richtung seiner Sperrstellung ausgeübt ist. Der jeweilige Sperriegel 16 weist auf seinem, den Eingriffsflächen 20 abgewandten Teil ein Langloch 30 auf, das von der Antriebswelle 24 durchgriffen ist, wobei das Langloch 30 eine dem Verfahrweg des Sperriegels 16 entsprechende Eingriffslänge aufweist. Die jeweiligen Steuerscheiben 22 sind gleich ausgebildet und entlang ihres Außenumfanges mit einer Steuerkurve 32 versehen, die mit Steuernocken 34 am zugeordneten Sperriegel 16 zusammenwirkt, die an entgegengesetzten Enden des Langlochs 30 am Sperriegel 16 angeordnet sind. Ferner weist die jeweilige Steuerscheibe 22 eine Ausnehmung 36 für den Durchgriff der Antriebswelle 24 auf, die außenumfangsseitig mit Steuerflächen 38 versehen ist, die mit Ansteuerflächen 40 innerhalb der Ausnehmung 36 der Steuerscheibe 22 zusammenwirken.

Die einzelnen Sperriegel 16 sind mit einem axialen Abstand voneinander in Führungen 42 des Riegelgehäuses 26 geführt, die quer zur Schienenlängsrichtung verlaufen, wobei die Sperriegel 16 über die jeweilige Druckfeder 28 (vgl. Fig.1 bis 4) in Richtung ihrer blockierenden Sperrstellung gehalten sind. Die jeweilige Druckfeder 28 stützt sich dabei mit ihrem einen Ende an einem Deckblech 44 als Teil des Riegelgehäuses 26 ab und mit ihrem anderen Ende an der Oberseite des Sperriegels 16. Das Deckblech 44 läßt sich aus einem ebenen Blechzuschnitt ausschneiden oder ausstanzen und somit herstellen, wobei durch entsprechendes Umbiegen und Umwalzen die Außenkontur des Deckbleches 44 entsteht, das auf seiner den Sperriegeln 16 abgewandten Seite paarweise einander diametral gegenüberliegende Haltevorsprünge 46 aufweist, die mit ihren hakenförmigen Vorständen eine Anlagefläche für das eine freie Ende der jeweiligen Druckfeder 36 ausbilden. Das Deckblech 44 weist darüber hinaus an seiner den Haltevorsprüngen 46 benachbart gegenüberliegenden Seite Ausnehmungen (nicht näher dargestellt) auf, die dem Durchgriff von feststehenden Gehäuseteilstegen 48 dienen, was das Festlegen des Deckbleches 44 auf der Oberseite des ihm zugeordneten Riegelgehäuses 26 erleichtert.

Wie insbesondere die Fig.6 und 7 zeigen, weist das Riegelgehäuse 26 in seiner Längsrichtung gesehen beidseitig nach unten hin, also in Richtung der freien Enden der Sperriegel 16, sich konisch verjüngende Flankenteile 50 auf, die mit Bohrungen 52 versehen sind, die dem Durchgriff nicht näher dargestellter Schrauben dienen zwecks Festlegen des Riegelgehäuses 26 an dem anderen einstellbaren Teil, beispielsweise in Form einer Gleitschiene (nicht näher dargestellt). Das Riegelgehäuse 26 weist Schlitzführungen 54 auf, die dem Durchgriff der jeweiligen Steuerscheibe 22 dienen, die im übrigen ebenfalls in den Führungen 42 des Riegelgehäuses 26 geführt sind, wobei die jeweilige Schlitzführung 54 in Blickrichtung auf die Fig.6 und 7 gesehen nach unten hin ein Anlagestück 56 für die jeweilige Steuerscheibe 22 aufweist.

Die Steuerkurve 32 einer jeden Steuerscheibe 22 ist im wesentlichen mit konvex vorstehenden Wölbungen versehen, wobei im Durchgriffsbereich der Antriebswelle 24 die Steuerkurve 32 mit einem vorgebbaren Versatz im wesentlichen dem kreisbogenförmigen Verlauf der bogenförmigen Teile der jeweiligen Ausnehmung 36 nachgeführt ist. Für den Durchgriff der Antriebswelle 24 weist, wie dies die Fig.7 zeigt, das Riegelgehäuse 26 durchgehende Durchgriffsbohrungen 58 auf in den Gehäusewänden 60, die die Führungen 42 begrenzen. Steuerflächen 38 und Ansteuerflächen 40 von Antriebswelle 24 bzw. Ausnehmungen 36 in den Steuerscheiben 22 sind in der Art eines Steckschlüsselsystems ausgebildet, wobei die jeweils miteinander in Anlage zu bringenden Flächen 38 und 40 einen solchen radialen Abstand voneinander aufweisen, daß die wirksamen Ansteuerstellungen für den Sperriegel 16 erreicht sind. Die Drehachse der Antriebswelle 24 liegt in einer Mittenebene 62, die der Mitte des Längsverfahrweges des jeweiligen Sperriegels 16 entspricht. Durch die Exzentrizität der Steuerscheibe 22 ist ein Lösen der Verriegelungsstellung, auch im Crashfall nicht möglich, was der Erhöhung der Sicherheit dient.

Zum besseren Verständnis der Verriegelungsvorrichtung wird diese im nachfolgenden anhand eines Funktionsablaufs bezogen auf die Fig.1 bis 4 näher erläutert. Die Fig.1 bezieht sich auf eine entriegelte Stellung, d.h. alle in diesem Ausführungsbeispiel 5 hintereinander angeordneten Sperriegel 16 sind in ihrer angehobenen Position gemäß der Fig. 1. Der Kraftspeicher in Form der Druckfeder 28 ist in dieser Stellung vorgespannt und der jeweilige Sperriegel 16 wird über die Steuerscheibe 22 und in Blickrichtung auf die Figuren gesehen über den oberen Steuernocken 34 in seiner Position gehalten. Zwischen dem unteren Steuernokken 34 eines jeden Sperriegels 16 und dem benachbart gegenüberliegenden Teil der Steuerkurve 32 einer jeden Steuerscheibe 22 ist ein geringfügiges Spiel vorhanden. Im übrigen ist die Steuerscheibe 22 bis auf einen Nasenvorsprung vollständig in den Schlitzführungen 54 des Riegelgehäuses 26 aufgenommen.

Das freie Ende des Sperriegels 16 weist einen axialen Abstand gegenüber der Rastöffnung 12 auf und die beiden gegeneinander einstellbaren Teile (Schiene 10 und Gegenschiene) sind frei zueinander über eine vorgebbare Wegstrecke bewegbar. Die Steuerflächen 38 und die Ansteuerflächen 40, die im übrigen durch diametral zur Schwenkachse der Antriebswelle 24 gegenüberliegende Vorsprünge an Antriebswelle 24 bzw. an der Steuerscheibe 22 gebildet sind, sind, sofern sie aneinanderliegen, in Blickrichtung auf die Fig.1 gesehen horizontal ausgerichtet. Sofern sie nicht in Anlage miteinander sind, bilden die Steuerflächen 38 und die Ansteuerflächen 40 diametral einander gegenüberliegend einen bogenartigen Verfahrweg aus, über dessen freie Wegstrecke sich die Antriebswelle 24 entgegen dem Uhrzeigersinn bewegen läßt. Das Verschwenken oder Drehen der Antriebswelle 24 entlang ihrer Längsachse geschieht über geeignete Stellmittel (nicht dargestellt) von Hand oder ansonsten mechanisch sowie elektrisch, um einen Einstellvorgang am Sitz zu ermöglichen.

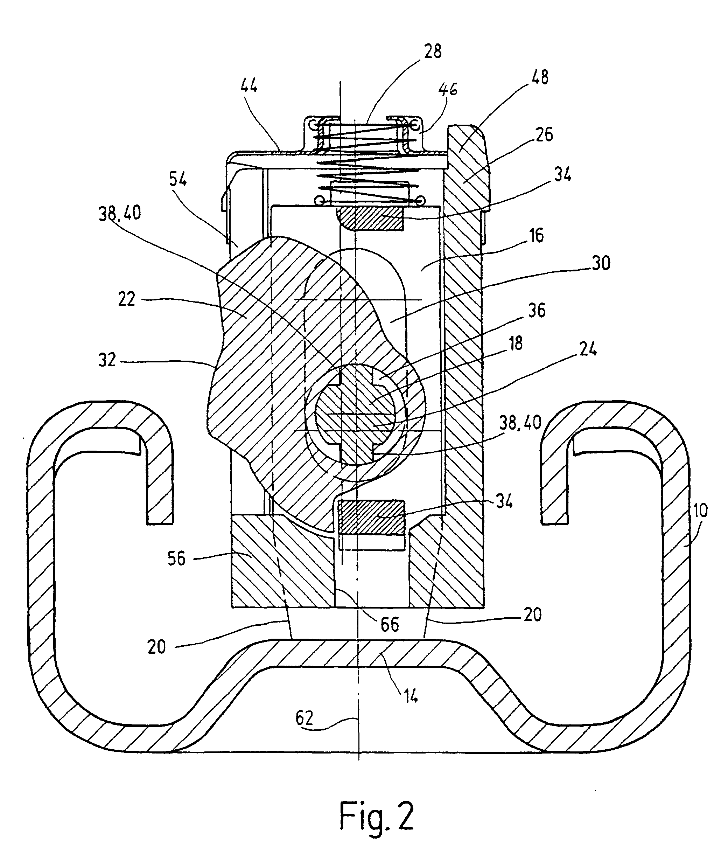

Für einen Auslösevorgang der jeweiligen Sperriegel 16 in ihre Sperrstellung ist, wie dies die Fig.2 bis 4 zeigen, die Antriebswelle 24 entgegen dem Uhrzeigersinn um 90° geschwenkt worden, wobei nunmehr die in Anlage miteinander befindlichen Steuerflächen 38 und Ansteuerflächen 40 in Blickrichtung auf die Figuren gesehen in einer vertikalen Ebene ausgerichtet sind. Die bisher in Anlage miteinander befindlichen Steuerflächen 38 und Ansteuerflächen 40 begrenzen nunmehr zwischen sich den bogenförmigen freien Verfahrweg. Durch die Antriebsbewegung über die Antriebswelle 24 ist im übrigen die Steuerscheibe 22 mindestens bis zur Position in der Fig.2 entgegen dem Uhrzeigersinn mit verschwenkt worden.

Bei der Verriegelungsstellung nach der Fig.2 haben die Eingriffsflächen 20 des Sperriegels 16 keine Rastöffnung 12 getroffen, sondern die dahingehende Unterseite des Sperriegels 16 liegt auf den stegartigen Materialpartien 14 der Schiene 10 auf. Da die Steuerkurve 32 der Steuerscheibe 22 nach der Fig.2 den oberen Steuernocken 34 freigegeben hat, kann sich die Druckfeder 28 entspannen und den Sperriegel 16 nach unten hin verschieben, bis dieser auf dem Boden der Schiene aufsitzt. Um diesen Wegbetrag verschiebt sich auch die freie Eingriffslänge des Langlochs 30 nach unten. Hierbei ist die zugeordnete Steuerscheibe 22 gegen eine weitere Schwenkbewegung in Richtung der Sperrstellung über den der Schiene 10 benachbart angeordneten Steuernocken dieses Sperriegels 16 blockiert, wobei die nach unten vorstehende AnschJagfläche der Steuerkurve 32 in vertikaler Anlage mit den vertikalen Randbegrenzungsflächen des unteren Steuernockens 34 kommt.

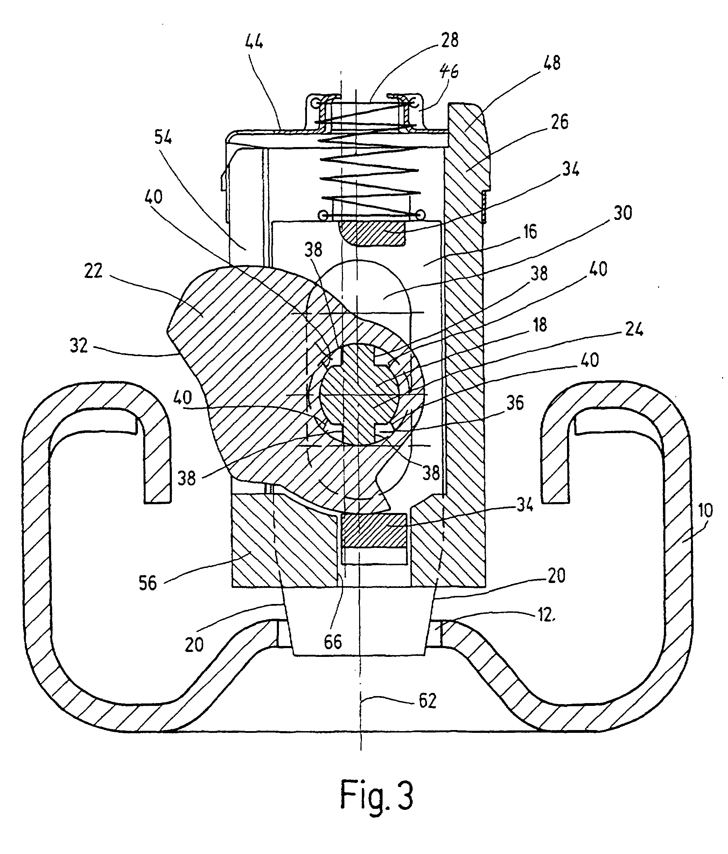

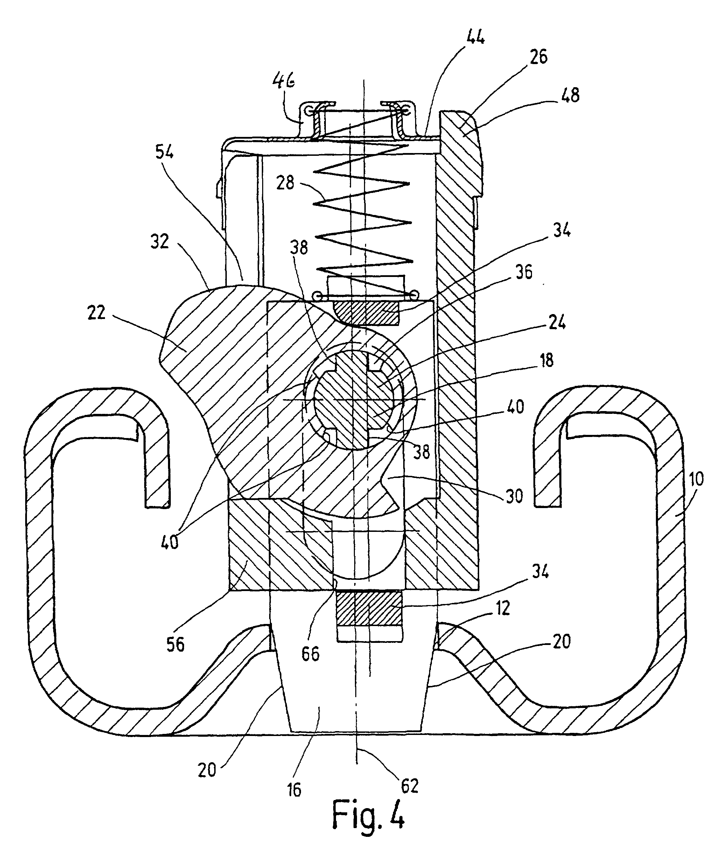

Die Darstellung nach der Fig.3 betrifft eine verriegelte Stellung in dem Sinne, daß die Eingriffsflächen 20 des Sperriegels 16 im Bereich der sich konisch oder trapezartig verjüngenden Seitenflächen 68 einer zugeordneten Rastöffnung 12 (vgl. Fig.5) anliegen. Auch eine dahingehende Anlage führt zu einer Verriegelung des jeweiligen Sperriegels 16, wobei ein weiteres Eingreifen des Sperriegels 16 in die Rastöffnung 12 über die Seitenflächen 68 der jeweiligen Rastöffnung 12 verhindert ist. Der untere Steuernocken 34 ist dabei in die Ausnehmung 66 des Riegelgehäuses 26 eingefahren und die Steuerkurve 32 der Steuerscheibe 22 übergreift die Oberseite des Steuernockens 34 derart, daß eine ungewollte Aushebebewegung entgegen der Federkraft der Druckfeder 28 mit Sicherheit verhindert ist. Die Steuerflächen 38 sind wiederum vertikal ausgerichtet und weisen nun jeweils einen radialen Abstand zu den Ansteuerflächen 40 der Ausnehmungen 36 der Steuerscheibe 22 auf.
Bei der verriegelten Stellung nach der Fig.4, bei der sich der Sperriegel 16 vollständig im Eingriff mit der Rastöffnung 12 befindet, sind die Eingriffsflächen 20 in Anlage mit den Mittenwänden zwischen den Seitenflächen 68 einer zugeordneten Rastöffnung 12. Der untere Steuernocken 34 ist aus der Ausnehmung 66 des Riegelgehäuses 26 nach unten hin ausgetreten, wobei die Ausnehmung 66 nach oben hin von der Steuerscheibe 22 derart abgedeckt ist, daß auch bei hochfrequenten Schwingungsanteilen im Crashfall der Riegel 16 nicht ausheben kann, da der freie Verfahrweg nach oben hin durch die Steuerscheibe 22 blockiert ist. Um ein Überschwenken der Steuerscheibe 22 in der Fig.4 im GegenUhrzeigersinn zu vermeiden, befindet diese sich über eine Anschlagfläche in Anlage mit dem Anlagestück 56 des Riegelgehäuses 26. Ferner ist der weitere Verfahrweg des oberen Steuernockens 34 unter dem Einfluß der nunmehr im wesentlichen entspannten Druckfeder 28 über den oberen Teil der Steuerkurve 32 verhindert. Zum Entsperren der Verriegelungsvorrichtung wird die Antriebswelle 24 über die Betätigungseinrichtung im Uhrzeigersinn verschwenkt, wobei die jeweilige Steuerscheibe 22 mitgenommen wird und diese den jeweiligen Sperriegel 16 in seine Freigabestellung zurücknimmt gemäß der Darstellung nach der Fig.1, indem über den oberen Steuernocken 34 die Rückstellbewegung unter Spannen der Druckfeder 28 erfolgt. In diesem Anlagebereich bildet die jeweilige Steuerscheibe 22 dann eine Art schräge Ebene aus.

Bei bevorzugt fünf hintereinander angeordneten Sperriegeln 16 befinden sich immer in gegenüberliegenden Randbereichen für eine gegenseitige Sperrung in zwei Verfahrrichtungen der Schienenteile zueinander die in Rede stehenden zwei oder drei Sperriegel 16 in einer Position nach der Fig.3 oder der Fig.4, wobei bei einer Position nach der Fig.3 ein weiterer dritter Sperriegel voll in die Rastöffnung 12 eingreifen kann. Auf diese Art und Weise ist immer eine sichere Verriegelung auch im Crashfall erreicht und eine definierte Ansteuerung des jeweiligen Sperriegels 16 über den Formschluß mit der jeweils ihm zugeordneten Steuerscheibe 22 gewährleistet.

## Patentansprüche

1. Verriegelungsvorrichtung für Fahrzeugsitze mit zwei relativ zueinander einstellbaren Teilen, mit einer dem einen Teil zugeordneten, sich in der Einstellrichtung erstreckenden Schiene (10), die mindestens eine sich in Schienenlängsrichtung erstreckende Reihe von Rastöffnungen (12) aufweist, die durch stegartige Materialpartien (14) voneinander getrennt sind, und mit dem anderen Teil zugeordneten Sperriegeln (16), die quer zur Erstreckungsrichtung der Schiene (10) relativ zu dieser zwischen einer Freigabestellung und einer Sperrstellung bewegbar sowie über eine Betätigungseinrichtung (18) ansteuerbar sind und von denen in der Sperrstellung eine Sperrung in entgegengesetzten Richtungen der relativ zueinander einstellbaren Teile mindestens zwei Sperriegel (16) in eine jeweils zugeordnete Rastöffnung (12) eingreifen, **dadurch gekennzeichnet, daß** jedem Sperriegel (16) zugeordnet eine Steuerscheibe (22) vorhanden ist, die von einer gemeinsamen Antriebswelle (24) als Betätigungseinrichtung (18) bewegt den jeweiligen Sperriegel (16) bei seinem Bewegungsablauf ansteuert.

2. Verriegelungsvorrichtung nach Anspruch 1, **dadurch gekennzeichnet, daß** der jeweilige Sperriegel (16) in einem Riegelgehäuse (26) längsverfahrbar geführt ist und unter der Wirkung eines Kraftspeichers eine Kraftkomponente in Richtung seiner Sperrstellung erfährt.

3. Verriegelungsvorrichtung nach Anspruch 1 oder 2, **dadurch gekennzeichnet, daß** der jeweilige Sperriegel (16) ein Langloch (30) aufweist, das von der Antriebswelle (24) durchgriffen ist und eine dem Verfahrweg des Sperriegels (16) entsprechende Eingriffslänge aufweist.

4. Verriegelungsvorrichtung nach Anspruch 3, **dadurch gekennzeichnet, daß** die jeweiligen Steuerscheiben (22) gleich ausgebildet sind und entlang ihres Außenumfangs mit einer Steuerkurve (32) versehen sind, die mit Steuernokken (34) am zugeordneten Sperriegel (16) zusammenwirkt, die an entgegengesetzten Enden des Langlochs (30) am Sperriegel (16) angeordnet sind.

5. Verriegelungsvorrichtung nach einem der Ansprüche 1 bis 4, **dadurch gekennzeichnet, daß** die jeweilige Steuerscheibe (22) eine Ausnehmung (36) für den Durchgriff der Antriebswelle (24) aufweist, die mit Steuerflächen (38) versehen ist, die mit Ansteuerflächen (40) innerhalb der Ausnehmung (36) der Steuerscheibe (22) zusammenwirken.

6. Verriegelungsvorrichtung nach Anspruch 4 oder 5, **dadurch gekennzeichnet, daß** in der Freigabestellung des jeweiligen Sperriegels (16) die zugeordnete Steuerscheibe (22) in blockierender Anlage mit dem dem gespannten Kraftspeicher benachbart gegenüberliegenden Steuernocken (34) dieses Sperriegels (16) ist.

7. Verriegelungsvorrichtung nach einem der Ansprüche 4 bis 6, **dadurch gekennzeichnet, daß** bei Aufliegen des jeweiligen Sperriegels (16) auf den stegartigen Materialpartien (14) der Schiene (10) die zugeordnete Steuerscheibe (22) gegen eine weitere Schwenkbewegung in Richtung der Sperrstellung über den der Schiene (10) benachbart angeordneten Steuernocken (34) dieses Sperriegels (16) blockiert ist.

8. Verriegelungsvorrichtung nach einem der Ansprüche 4 bis 7, **dadurch gekennzeichnet, daß** in einer Sperrstellung des jeweiligen Sperriegels (16) die zugeordnete Steuerscheibe (22) den der Schiene (10) benachbarten Steuernocken (34) dieses Sperriegels (16) in Richtung dieser Sperrstellung blokkiert.

9. Verriegelungsvorrichtung nach einem der Ansprüche 4 bis 8, **dadurch gekennzeichnet, daß** in der verriegelten Sperrstellung des jeweiligen Sperriegels (16) die zugeordnete Steuerscheibe (22) in blockierender Anlage mit dem dem teilentspannten Kraftspeicher benachbart gegenüberliegenden Steuernocken (34) dieses Sperriegels (16) ist und daß der Verfahrweg des anderen Steuernockens (34) dieses Sperriegels (16) in die Freigabestellung durch die Steuerscheibe (22) blockiert ist.

10. Verriegelungsvorrichtung nach einem der Ansprüche 4 bis 9, **dadurch gekennzeichnet, daß** der jeweilige, der Schiene (10) benachbart gegenüberliegend angeordnete Steuernocken (34) innerhalb des Riegelgehäuses (26) durch eine Ausnehmung (66) zwischen der Freigabestellung und der Sperrstellung geführt ist.

## Claims

1. Locking device for vehicle seats, comprising two parts which can be adjusted in relation to one another, with a rail (10) which is allocated to one of said parts and extends in the direction of adjustment, and has at least one row of detent openings (12) extending in the longitudinal direction of the rail and separated from one another by web-like segments of material (14), and with locking bars (16) allocated to the other part and adapted to move crosswise to the direction in which the rail (10) extends and relative to said rail between a release position and a locking position, as well as to be activated via an actuator (18), and in the locking position, to bring about interlocking in opposite directions of the parts adjustable in relation to one another, at least two of said locking bars (16) engage in a respective detent opening,
**characterised in that** allocated to each locking bar (16) there is a disk cam (22) which, moved by a common drive shaft (24) as the actuator (18), activates the respective locking bar (16) in the course of its movement.

2. Locking device according to claim 1, **characterised in that** the respective locking bar (16) is guided so as to be displaced lengthways in a latch enclosure (26) and under the action of an energy store experiences a force component in the direction of its locking position.

3. Locking device according to claim 1 or 2, **characterised in that** the respective locking bar (16) incorporates a slot (30) through which the drive shaft (24) passes and has an engagement length that corresponds to the path taken by the locking bar (16).

4. Locking device according to claim 3, **characterised in that** the respective disk cams (22) are identical in construction and along their external circumference are provided with a cam (32) which cooperates with operating cams (34) on the associated locking bar (16) which are disposed on the locking bar (16), at opposite ends of the slot (30).

5. Locking device according to any of claims 1 to 4, **characterised in that** the respective disk cam (22) incorporates a recess (36) for the passage of the drive shaft (24), which is provided with control surfaces (38) which cooperate with activating surfaces (40) inside the recess (36) of the disk cam (22).

6. Locking device according to claim 4 or 5, **characterised in that** with the respective locking bar (16) in the release position, the associated disk cam (22) rests against and locks the operating cam (34) of said locking bar (16), said operating cam (34) being situated adjacent and opposite to said energy store.

7. Locking device according to any of claims 4 to 6, **characterised in that** when the respective locking bar (16) is resting on the web-like segments of material (14) of the rail (10), the associated disk cam (22) is locked against any further swivelling movement in the direction of the locking position via the operating cam (34) of said locking bar (16), said cam (34) being disposed adjacent to the rail (10).

8. Locking device according to any of claims 4 to 7, **characterised in that** with the respective locking bar (16) in a locking position, the associated disk cam (22) locks the operating cam (34) of said locking bar (16) in the direction of said locking position, said cam (34) being adjacent to the rail (10).

9. Locking device according to any of claims 4 to 8, **characterised in that** with the respective, locking bar (16) in the locked position, the associated disk cam (22) rests against and locks the operating cam (34) of said locking bar (16), said cam (34) being disposed adjacent and opposite to the partly relaxed energy store, and that the path taken by the other operating cam (34) of said locking bar (16) into the release position is blocked by the disk cam (22).

10. Locking device according to any of claims 4 to 9, **characterised in that** the respective operating cam (34) disposed adjacent and opposite to the rail (10) is guided inside the latch housing (26) through a recess (66) between the release position and the locking position.

## Revendications

1. Dispositif de verrouillage pour des sièges de véhicule, avec deux parties réglables l'une par rapport à l'autre, avec une glissière (10) associée à une partie, s'étendant dans la direction du réglage, glissière présentant au moins une rangée d'ouvertures d'encliquetage (12) s'étendant dans la direction longitudinale de la glissière, ouvertures séparées les unes des autres par des parties de matériau (14) du genre de nervures, et avec des pênes de blocage (16) associés à l'autre partie, qui sont déplaçables transversalement à la direction d'étendue de la glissière (10), par rapport à celle-ci, entre une position de libération et une position de blocage et sont susceptibles d'être commandés par un dispositif d'actionnement (18) et dont, à la position de blocage, pour obtenir un blocage, dans des directions opposées, des parties réglables l'une par rapport à l'autre, au moins deux pênes de blocage (16) s'engagent dans une ouverture d'encliquetage (12) chaque fois associée, **caractérisé en ce que**, à chaque pêne de blocage (16) est associé un disque de commande (22) qui, déplacé par un arbre d'entraînement (24) commun faisant office de dispositif d'actionnement (18), commande le pêne de blocage (16) respectif lors du déroulement de son mouvement.

2. Dispositif de verrouillage selon la revendication 1, **caractérisé en ce que** le pêne de blocage (16) respectif est guidé, de façon déplaçable longitudinalement dans un boîtier de pêne de blocage (26) et, sous l'effet d'un accumulateur de force, subit une composante de force orientée dans la direction de sa position de blocage.

3. Dispositif de verrouillage selon la revendication 1 ou 2, **caractérisé en ce que** le pêne de blocage (16) respectif présente un trou allongé (30), qui est traversé par l'arbre d'entraînement (24) et présente une longueur d'engagement correspondant à la course de déplacement du pêne de blocage (16).

4. Dispositif de verrouillage selon la revendication 3, **caractérisé en ce que** les disques de commande (22) respectifs sont de configuration identique et sont munis, le long de leur périphérie extérieure, d'une came de commande (32), qui coopère avec des ergots de commande (34) situés sur le pêne de blocage (16) associé, disposés à des extrémités opposées du trou allongé (30), sur le pêne de blocage (16).

5. Dispositif de verrouillage selon l'une des revendications 1 à 4, **caractérisé en ce que** le disque de commande (22) respectif présente un évidement (36) pour le passage de l'arbre d'entraînement (24), muni de surfaces de commande (38), qui coopèrent avec des surfaces de commande, placées à l'intérieur de l'évidement (36) du disque de commande (22).

6. Dispositif de verrouillage selon la revendication 4 ou 5, **caractérisé en ce que**, dans. la position de libération du pêne de blocage (16) respectif, le disque de commande (12) associé est en appui bloquant envers l'ergot de commande (34), opposé, voisin de l'accumulateur de forage contraint, de ce pêne de blocage (16).

7. Dispositif de verrouillage selon l'une des revendications 4 à 6, **caractérisé en ce que**, en cas de pose du pêne de blocage (16) respectif sur les parties de matériau (14), du genre de nervures, de la glissière (10), le disque de commande (22) associé est bloqué contre toute continuation du mouvement de pivotement dans la direction de la position de blocage, par l'intermédiaire de l'ergot de commande (34), disposé au voisinage de la glissière (10), de ce pêne de blocage (16).

8. Dispositif de verrouillage selon l'une des revendications 4 à 7, **caractérisé en ce que**, dans une position de blocage du pêne de blocage (16) respectif, le disque de commande (22) associé bloque l'ergot de commande (34), voisin de la glissière (10), de ce pêne de blocage (16), dans la direction de cette position de blocage.

9. Dispositif de verrouillage selon l'une des revendications 4 à 8, **caractérisé en ce que**, dans la position de blocage verrouillée du pêne de blocage (16) respectif, le disque de commande (22) associé est bloqué, en appui bloquant, avec l'ergot de commande (34) opposé, voisin de l'accumulateur dé force partiellement relâché, de ce pêne de blocage (16), et **en ce que** la course de déplacement de l'autre ergot de commande (34) de ce pêne de blocage (16) est bloquée à la position de libération, par le disque de commande (22).

10. Dispositif de verrouillage selon l'une des revendications 4 à 9, **caractérisé en ce que** l'ergot de commande (34) respectif, disposé à l'opposé au voisinage de la glissière (10), est guidé, entre la position de libération et la position de blocage à l'intérieur du boîtier de pêne (26), par un évidement (66).
